# EUROPEAN PATENT APPLICATION

(11) **EP 3 916 657 A1**
(43) Date of publication of application: **01.12.2021**
(21) Application number: 20183779.6
(22) Date of filing: 02.07.2020
(51) Int. Cl.: G06Q 10/08

(54) **A SYSTEM AND METHOD FOR GENERATING STRATEGIES FOR PROCUREMENT CATEGORIES**

(30) Priority: 25.05.2020 US 202016882626
(71) Applicant: Jelavic, Drasko, Zegreb (HR)
(72) Inventor: Jelavic, Drasko, Zagreb (HR); Ahel, Renee, Zagreb (HR); Loncar, Andrija, Gradac (HR); Fresl, Luka, Samobor (HR)
(74) Representative: ABYOO

(57) **Abstract**

A procurement expert system and specifically a system and method for generating strategies for procurement categories. The expert system implements a series of procurement related processes which identify a purchaser's positioning within a procurement category relative to its suppliers. The position is determined based on specific answers to a plurality of questions to which weights have been assigned. Once the purchaser's position has been determined, one or more strategic levers are identified. One or more strategic objectives are also identified using a mapping between strategic levers and strategic objectives. The expert system may revise its selection of strategic objectives based on specific answers provided by the purchaser to strategy revision questions.

## Description

### FIELD

The present invention relates to a procurement expert system and specifically to a system and method for generating strategies for procurement categories.

### BACKGROUND

It is a primary objective of the present disclosure to provide a solution to the common problem that businesses often lack any form of procurement expertise. Procurement professionals are frequently focused on day-to-day operational tasks of the business while spending little time focusing on a strategic approach to category management. A strategic approach to category management requires developing a category strategy that requires substantial procurement expertise to be done correctly.

### SUMMARY

The present disclosure addressed the common business problem of a lack of procurement expertise with an expert system that recommends strategies for procurement categories.

In some embodiments, a system for generating strategies for procurement categories is provided. The system comprising a client spend database including a plurality of spend transactions between a purchaser and a plurality of suppliers and within one or more procurement categories, a knowledge database including a plurality of questions with a first set of predefined answers, a plurality of strategic levers, and a plurality of strategic objectives, an expert system that is processor based and is communicatively coupled to the client spend database and the knowledge database, the expert system implementing a Kraljic matrix engine and a supplier preferencing matrix engine, the Kraljic matrix engine capable of determining a first quadrant within a Kraljic matrix defined by a supply market complexity axis and an impact on business success axis for the purchaser within a procurement category, the first quadrant within a Kraljic matrix being reflective of specific answers selected from the first set of predefined answers by the purchaser to the plurality of questions, the supplier preferencing matrix engine capable of determining a second quadrant within a supplier preferencing matrix defined by an account attractiveness axis and an account value axis for a selected grouping of suppliers within the procurement category, the second quadrant within a supplier preferencing matrix being reflective of specific answers selected from the first set of predefined answers by the purchaser to the plurality of questions, the expert system including a first assignment of numerical weights that assigns a numerical weight to each of the plurality of questions and each of the first set of predefined answers and a first mapping between the plurality of strategic levers and the plurality of strategic objectives, the expert system further implementing a strategic levers engine capable of identifying specific strategic levers from the plurality of strategic levers based on a combination of the first quadrant and the second quadrant, and the expert system further implementing a strategic objectives engine capable of identifying one or more specific strategic objectives from the plurality of strategic objectives based on the first mapping.

In some embodiments, a method for generating strategies for procurement categories is provided. The method comprising providing a client spend database including a plurality of spend transactions between a purchaser and a plurality of suppliers and within one or more procurement categories, providing a knowledge database including a plurality of questions with a first set of predefined answers, a plurality of strategic levers, and a plurality of strategic objectives, providing an expert system that is processor based and is communicatively coupled to the client spend database and the knowledge database, the expert system including a first assignment of numerical weights that assigns a numerical weight to each of the plurality of questions and each of the first set of predefined answers and a first mapping between the plurality of strategic levers and the plurality of strategic objectives, determining a first quadrant within a Kraljic matrix defined by a supply market complexity axis and an impact on business axis for the purchaser within a procurement category, the first quadrant being reflective of specific answers selected from the first set of predefined answers by the purchaser to the plurality of questions, determining a second quadrant within a supplier preferencing matrix defined by an account attractiveness axis and an account value axis for a selected grouping of suppliers within the procurement category, the second quadrant being reflective of specific answers selected from the first set of predefined answers by the purchaser to the plurality of questions, identifying specific strategic levers from the plurality of strategic levers based on a combination of the first quadrant and the second quadrant, and identifying specific strategic objectives from the plurality of strategic objectives based on the first mapping.

Still, other aspects, features, and advantages of this disclosure may be readily apparent from the following detailed description, as illustrated by several example embodiments. This disclosure may also be capable of other and different embodiments, and its several details may be modified in various respects. Accordingly, the drawings and descriptions are to be regarded as illustrative and not as restrictive.

### BRIEF DESCRIPTION OF THE DRAWINGS

The drawings, described below, are for illustrative purposes only and are not necessarily drawn to scale. The drawings are not intended to limit the scope of the disclosure in any way. Wherever possible, the same or like reference numbers are used throughout the drawings to refer to the same or like parts.
FIG. 1 is a block diagram of a system for generating strategies for procurement categories according to the embodiments disclosed herein.
FIG. 2 illustrates a block diagram of data groupings within the knowledge database according to the embodiments disclosed herein.
FIG. 3 is an illustrative representation of a Kraljic matrix as implemented within the Kraljic matrix engine in accordance with the embodiments disclosed herein.
FIG. 4 is an illustrative representation of a supplier preferencing matrix implemented within the supplier preferencing engine in accordance with the embodiments disclosed herein.
FIG. 5 is a flow chart of a method implemented by the Kraljic matrix engine according to the embodiments disclosed herein.
FIG. 6 is a flow chart of a method implemented by the supplier preferencing matrix engine according to the embodiments disclosed herein.
FIG. 7 is a flow chart of a method implemented by the category situation engine according to the embodiments disclosed herein.
FIG. 8 is a flow chart of a method implemented by the strategic levers engine according to the embodiments disclosed herein.
FIG. 9 is a flow chart of a method implemented by the strategic objectives engine according to the embodiments disclosed herein.
FIG. 10 is a flow chart of a method implemented by the strategy revision engine according to the embodiments disclosed herein.

### DETAILED DESCRIPTION

As mentioned above, this application relates to an expert procurement system and specifically to a system and method for generating strategies for procurement categories.

The expert system of the present disclosure implements a series of procurement related processes which identify a purchaser's positioning within a procurement category relative to its suppliers. The procurement related process may be characterized as individual process engines that include a Kraljic matrix engine, a supplier preferencing matrix engine, a procurement category situation engine, a strategic levers engine, a strategic objective engine, and a strategy revision engine.

In determining the purchaser's position with a procurement category, the expert system has access to past spend transactions between the purchaser and the suppliers. The expert system also has access to various data resources used by the individual process engines that enable it to perform the role of a procurement administrator including identifying relevant strategic levers and strategy objectives. These data resources may include a plurality of questions with predefined answers, procurement category situations, strategic levers, strategic objectives, and strategy revision questions.

The expert system assigns numerical weights to each of the plurality questions and each of their predefined answers, the assigned numerical weights representative of the relevance of a question and its corresponding predefined answer in determining the purchaser's positioning within a procurement category.

Once the expert system determines the purchaser's position within a procurement category, one or more strategic levers are identified using the determined position within the procurement category. The strategic levers describe individual actions that may be taken within the purchaser's procurement category. The expert system also assigns benefits points to each of the strategic levers representative of the impact the implementation a strategic lever may have on the procurement category.

Once the expert system has identified one or more strategic levers, it identifies one or more strategic objectives using a mapping between strategic levers and strategic objectives. The expert system also prioritizes strategic objectives that have been identified based on the benefit points assigned to each of identified strategic levers. The strategic objectives describe individual goals that may be beneficial within a procurement category.

Once the expert system has identified one or more strategic objectives, it may revise its selection using the purchaser's answers to the strategy revision questions. The expert system assigns a numerical weight to each of the strategy revision questions and their corresponding answers. The assigned numerical weights representative of the relevance of a question and its corresponding answer in modifying the strategic objectives identified for a purchaser within the procurement category.

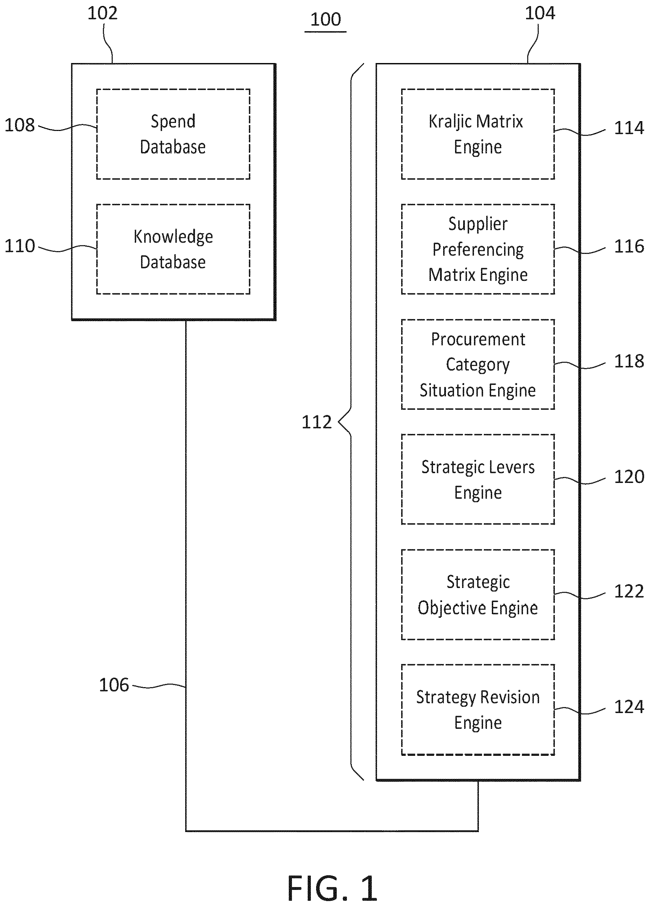

FIG. 1 is a block diagram of a system 100 for generating strategies for procurement categories according to the embodiments disclosed herein. The system 100 may include databases 102, an expert system 104, and a network 106.

The network 106 may interconnect the databases 102 and the expert system 104. The network 106 may be a local area network (LAN), a wide area network (WAN), or the Internet using one or more appropriate network or web services.

The databases 102 may include a spend database 108 and a knowledge database 110. The spend database 108 storing category based spend transactions that are referenced by the expert system to generate strategies for procurement categories. The knowledge database 110 stores reference data used by the expert system to implement the processes necessary to identify strategies for procurement categories. It will be understood by one of ordinary skill in the art that the databases 102 may be one database or multiple databases and may be centralized or distributed.

The expert system 104 may be a processor based computing system capable of executing instructions that specify actions taken by a plurality of process engines 112 implemented within the expert system 104. The processor based computing system may be comprised of a single computing machine or a collection of computing machines. A collection of computing machines may individually or jointly execute sets of instructions that define each of the plurality of process engines 112.

In various embodiments, the processor-based computing system comprising the expert system 104 may operate as a standalone device or may be connected, via a network, to other processor based computing systems. In the network-based deployment, the expert system 104 may operate in the capacity of a server or a client system in server-client type network deployment or a peer system in a peer-to-peer type network deployment.

The process engines 112 implemented within the expert system 104 may include a Kraljic matrix engine 114, a supplier preferencing matrix engine 116, a procurement category situation engine 118, a strategic levers engine 120, a strategic objective engine 122, and a strategy revision engine 124.

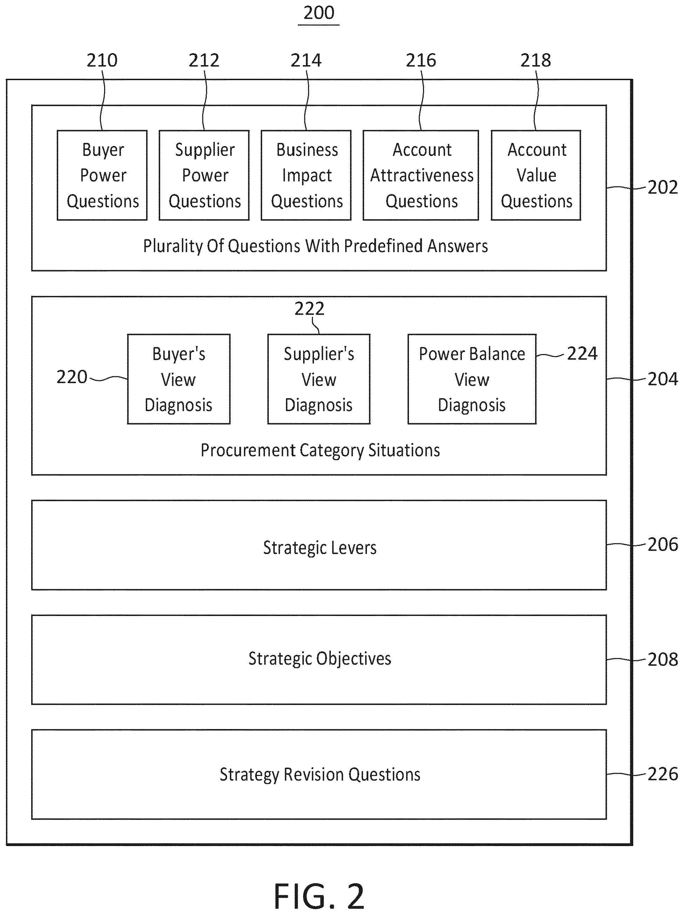

FIG. 2 illustrates a block diagram 200 of data groupings within the knowledge database 110 according to the embodiments disclosed herein. The data groupings are exemplary of the data accessed by the process engines 112 The data groupings may include a plurality of questions with predefined answers 202, procurement category situations 204, strategic levers 206, strategic objectives 208, and the strategy revision questions 226.

The plurality of questions with predefined answers 202 may include buyer power questions 210, supplier power questions 212, business impact questions 214, account attractiveness questions 216, and account value questions 218.

The buyer power questions 210 are designed to assess the power of a purchaser in a procurement category. Specifically, the buyer power questions 210 are designed to measure how dependent the purchaser is on a specific supplier, what level of competition there is in the procurement category, and how easily the supplier or a purchased product or service within the procurement category can be replaced.

The supplier power questions 212 are designed to assess the power of a supplier in a procurement category. Specifically, the supplier power questions 212 are designed to measure how consolidated the procurement category is, how difficult it is to enter the procurement category, and how scarce the product or service is in the procurement category.

The business impact questions 214 are designed to assess the importance of a procurement category to the overall business of a purchaser. Specifically, the business impact questions 214 determine the proportion of the spend in a procurement category to the purchaser's total spend and the impact of that procurement category on the quality of the purchaser's product or service.

The account attractiveness questions 216 are designed to assess the attractiveness of a purchaser to a supplier. Specifically, the account attractiveness questions 216 measure the level of interest, engagement, and quality of the relationship between the purchaser and the supplier.

The account value questions 218 are designed to assess the relative value of a purchaser to a supplier. Specifically, the account value questions 218 measure the ratio of the supplier's revenue from the purchaser to the supplier's total revenue. The account value questions 218 further measure the purchaser's impact on the supplier's profit margin.

The expert system 104 includes a first assignment of numerical weight that assigns a numerical weight along a linear scale to each of the plurality of the questions. The first assignment of numerical weights is representative of the importance of each of the plurality of questions to the determination of a purchaser's positioning within a procurement category. A higher numerical weight is assigned to those questions that are of a higher importance and a lower numerical weight is assigned to those questions that are of lower importance.

In general, a higher numerical weight is assigned to those questions relating to supply market complexity, maturity and competition level, supplier and purchased product/service substitutability, the importance of a procurement category to a purchaser's spend and business success, supplier interest in expanding the business and the quality of a relationship, and importance of buyer spend for local supplier revenue.

Similarly, in general, a lower numerical weight is assigned to questions relating to the existence of substitute products, quality of relationship with the supplier, the approval time for new suppliers, speed of market consolidation activities, the impact of the category on customer experience and product/service quality, financial terms, supplier location proximity, regular meetings, and importance of buyer spend for global supplier revenue.

In one exemplary embodiment, the numerical weight ranges from one (1) to ten (10), one (1) representing a minimum degree of relevance and ten (10) representing a maximum degree of relevance.

Moreover, the plurality of questions with predefined answers 202 may have a corresponding first set of predefined answers. The first assignment of weights assigns a numerical weight along a linear scale to each of the specific answers included in the first set of predefined answers.

In one exemplary embodiment, the specific answers comprising the first set of predefined answers may be "Low" with an assigned numerical weight of one (1), "Medium" with an assigned numeral weight of two (2), and "High" with an assigned numeral weight of three (3).

A person of ordinary skill in the art will understand that different ranges of numerical weights along a linear scale may be assigned to each of the questions while remaining within the scope of the present disclosure. Similarly, the first set of predefined answers may be comprised of different specific answers with different numerical weights assigned to each of the specific answers while remaining within the scope of the present disclosure.

The procurement category situations 204 represent a diagnosis of each of the different situations that may occur in a procurement category. Each diagnosis may be comprised of a buyer's view diagnosis 220 of a procurement category situation 204, a supplier's view diagnosis 222 of a procurement category situation 204, and a power balance view diagnosis 224 of a procurement category situation 204.

The buyer's view 220 diagnosis describes a purchaser's negotiation strengths, procurement category position, and supplier dependence. The buyer's view diagnosis 220 may also describe general guidelines for developing a supplier relationship.

The supplier's view 222 diagnosis describes a supplier's negotiation strengths and a ratio of supplier effort to supplier profit.

Lastly, the power balance view diagnosis 224 provides an estimate of the balance of power between a purchaser and a supplier within a procurement category.

The strategic levers 206 represent individual actions that can be taken relative to a procurement category.

The strategic levers 206 may be divided into logical sets of parent levers that may include competition, spend, cost, requirements, relationships, supply chain, processes, and organization. The competition grouping consists of actions that may leverage the level of competitiveness among suppliers. The spend grouping consists of actions that may help identify new opportunities to bundle spending across business units and procurement categories. The cost grouping consists of actions that may increase cost transparency for products or services being purchased. The requirements grouping consists of actions that may improve the function and specification of products or services to simplify the sourcing process. The relationship grouping consists of actions that may help develop favorable relationships with suppliers. The supply chain grouping consists of actions that may ensure optimal distribution of a purchaser's capabilities and capacity within a supply chain. The processes grouping consists of actions that may increase the efficiency of strategic, operational, and tactical procurement processes. Lastly, the organization grouping consists of actions that may make available the right skills and resources for managing a category as well as ensuring there is an adequate governance structure in place for managing that category.

Each of the strategic levers 206 may be assigned benefit points. The benefit points are representative of the amount of business benefits gained from the application of a strategic lever. In one exemplary embodiment, the benefit points range numerically from one (1) representative of the least amount of benefits gained to ten (10) representative of the greatest amount of benefits gained.

A person of ordinary skill in the art will understand that the benefit points may have other numerical ranges while remaining within the scope of the present disclosure.

The strategic objectives 208 represent broad goals that are part of a procurement category based strategy. Each of the strategic objectives 208 correlate to one or more of the strategic levers 206. Similarly, each of the strategic levers 206 corresponds to one or more of the strategic objectives 208.

The strategy revision questions 226 are procurement category analysis questions designed to gather a more detailed overview of purchaser's procurement category. The procurement category analysis may include product and market analyses, five forces analysis, business requirement analysis, and a strength, weaknesses, opportunities, and threats (SWOT) analysis.

The plurality of strategic lever modification questions has a corresponding second set of predefined answers.

Returning to FIG. 1, the Kraljic matrix engine 114 determines a quadrant for the purchaser within a Kraljic matrix.

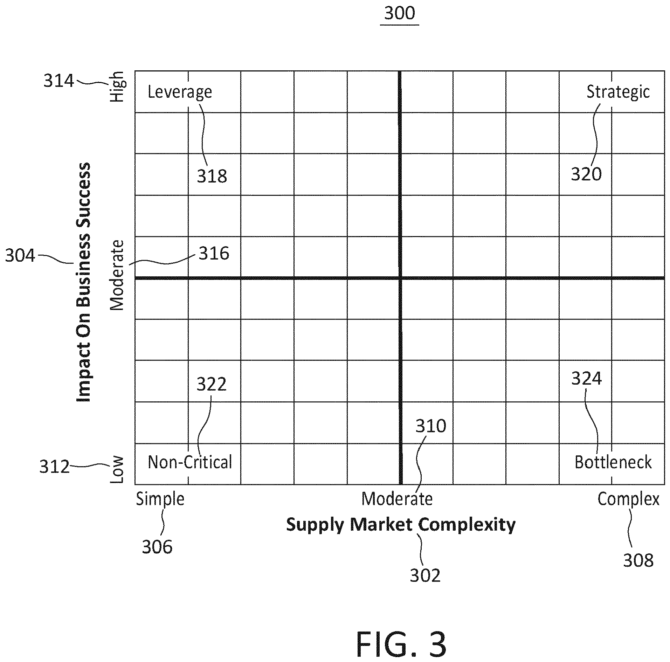

FIG. 3 is an illustrative representation of a Kraljic matrix 300 as implemented within the Kraljic matrix engine 114 in accordance with the embodiments disclosed herein. As shown, the Kraljic matrix 300 may include a supply market complexity axis 302 as an x-axis 302 and an impact on business success axis 304 as a y-axis 304. The supply market complexity axis 302 includes a first endpoint labeled "simple" 306, a second endpoint labeled "complex" 308, and a midpoint between the first and second endpoints 306, 308 labeled "moderate" 310.

The impact on business success axis 304 includes a first endpoint labeled "low" 312, a second endpoint labeled "high" 314, and a midpoint between the first and second endpoints 312, 314 labeled "moderate" 316.

In FIG. 3, the x-axis 302 and the y-axis 304 of the Kraljic matrix 300 do not show numerical ranges because they are representative of a qualitative scale rather than a quantitative scale. However, the first assignment of numerical weights of the expert system 104 also assigns a numerical weight along a linear scale to each of the qualitative axis delimiters, namely the "simple," "moderate," and "complex" delimiters on the x-axis 302 and the "low," "moderate," and "high" delimiters on the y-axis 304.

In one embodiment, the first assignment of numerical weights by the expert system 104 assigns to the delimiters of the x-axis 302 and y-axis 304 the same linear numeral range that is assigned to the first set of predefined answers.

As an example, with the first set of predefined answers being "Low" with an assigned numerical weight of one (1), "Medium" with an assigned numeral weight of two (2), and "High" with an assigned numeral weight of three (3), the x-axis 302 delimiters are "simple" with an assigned a numerical weight of one (1), "moderate" with an assigned weight of two (2), and "complex" with an assigned weight of three (3).

Similarly, the y-axis 304 delimiters are "low" with an assigned weight of one (1), "moderate" with an assigned weight of two (2), and "high" with an assigned weight of three (3).

The Kraljic matrix 300 includes four quadrants centered around the intersection of the midpoints 310, 316.

The first quadrant is labeled "leverage" 318 and represents procurement categories which have a high value and a low supply market complexity risk. The purchaser possesses power in this purchaser and supplier relationship and should leverage this strength. Suppliers can be easily substituted as their offerings are much the same. Traditionally, procurement professionals have exploited this status to lower prices.

The second quadrant is labeled "strategic" 320 and represents procurement categories which have high supplier risk based on supply market complexity and a high value. The suppliers are critical to the purchaser's business. These procurement categories usually represent only a couple of suppliers, but ensuring an effective and predictable supplier relationship is key to the future of the purchaser's company. Typical strategies within such a procurement category are changing the nature of demand using proactive development and innovation and establishing a partnership with the supplier. Managing strategic suppliers can consume a significant proportion of executive time in sponsoring and directing the purchaser and supplier relationship.

The third quadrant is labeled "non-critical" 322 and represents procurement categories which have low risk relative to supply market complexity and low value. One example of such a procurement category is office supplies. Although office supplies are important for employees in everyday work, pens, and paper will have a negligible impact on the purchaser's business. A shortage of office supplies will not represent a serious threat. Strategies deployed within such a procurement category focus on efficiency and reducing administrative burden. The responsibilities can be redirected to suppliers or to internal customers that are requisitioning the goods.

Lastly, the fourth quadrant is labeled "bottleneck" 324 and represents procurement categories with a high risk relative to supply market complexity and a low value. In this procurement category, the power is on the side of the supplier. The market usually consists of few suppliers that can behave in an oligopolistic manner and to dictate upward price development. The purchaser's relationship with the supplier is demanding, even though suppliers have a limited impact on the purchaser's company profitability. This market structure may force purchasers to accept unfavorable deals. Typical strategy approaches within this procurement category include damage control and changing the nature of demand. Innovative internal activities can redevelop end product and service requirements such that the procurement category can be replaced with a substitute, preferably sourced from a leverage supplier.

To determine a purchaser's quadrant within the Kraljic matrix 300, the Kraljic matrix engine 114 first determines a value for the supply market complexity axis 302. This x-axis value is determined using the specific predefined answers selected by the purchaser in response to the buyer power questions 210 and supplier power questions 212.

In an exemplary embodiment, the Kraljic matrix engine 114 presents the buyer power questions 210 and the supplier power questions 212 to the purchaser and records the specific answers selected by the purchaser from the first set of predefined answers to each of the presented questions.

Once the specific answers have been recorded, the Kraljic matrix engine 114 calculates a first weighted average of the weight of each of the presented buyer power questions 210 and the weight of the specific predefined answer to each of these presented questions.

Similarly, the Kraljic matrix engine 114 calculates a second weighted average of the weight of each of the presented supplier power questions 212 and the weight of the specific predefined answer to each of these presented questions.

Once the first and second weighted averages have been calculated, the Kraljic matrix engine 114 calculates a value for the supply market complexity axis using the following formula, x-axis value = (midpoint of the x-axis) + (second weighted average - first weighted average) / 2".

Next, the Kraljic matrix engine 114 determines a value for the impact on business success axis 304. This y-axis value is determined using the specific answers selected by the purchaser from the first set of predefined answers to the business impact questions 214.

The Kraljic matrix engine 114 presents the business impact questions 214 to the purchaser and records the specific predefined answer selected by the purchaser to each of these presented questions.

Once the specific answers have been recorded, the Kraljic matrix engine 114 calculates a value for the impact on business success axis 304 as a weighted average of the weight of each of the presented business impact questions 214 and the weight of the specific answers selected by the purchaser from the first set of predefined answers to each of the presented questions.

Once the values for both the supply market complexity axis and the impact on business success axis have been calculated, the Kraljic matrix engine 114 determines the purchaser's corresponding quadrant within the Kraljic matrix 300.

If the values for both the supply market complexity axis 302 and the impact on business success axis 304 are less than or equal to the midpoints of their respective x-axis 302 and y-axis 304, then the quadrant within the Kraljic matrix 300 is determined to be the "non-critical" quadrant 322.

Alternatively, if the value for the supply market complexity axis 302 is less than or equal to the midpoint of the x-axis 302 and the value for the impact on business success axis 304 is greater than the midpoint of the y-axis 304, then the quadrant within the Kraljic matrix 300 is determined to be the "leverage" quadrant 318.

Alternatively, if the value for the supply market complexity axis 302 is greater than the midpoint of the x-axis 302 and the value for the impact on business success axis 304 is less than or equal to the midpoint of the y-axis 304, then the quadrant within the Kraljic matrix 300 is determined to be the "bottleneck" quadrant 324.

Lastly, if the values for both the supply market complexity axis 302 and the value for the impact on business success axis 304 are greater than the midpoints of the respective x-axis 302 and y-axis 304, then the quadrant within the Kraljic matrix 300 is determined to be the "strategic" quadrant 320.

Returning to FIG. 1, the supplier preferencing matrix engine 116 determines the quadrants of individual suppliers within the supplier preferencing matrix.

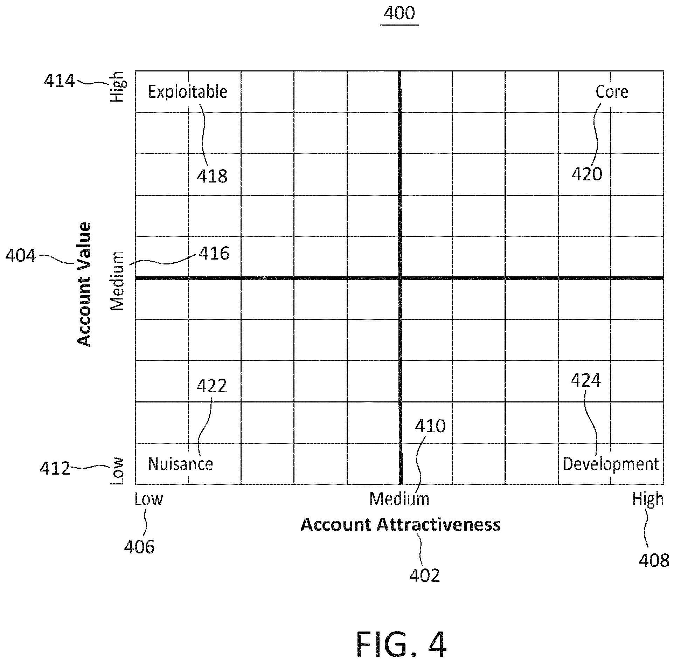

FIG. 4 is an illustrative representation of a supplier preferencing matrix 400 implemented within the supplier preferencing matrix engine 116 in accordance with the embodiments disclosed herein. As shown, the supplier preferencing matrix 400 may include an account attractiveness axis 402 as an x-axis and an account value axis 404 as a y-axis. The account attractiveness axis 402 may include a first endpoint labeled "low" 406, a second endpoint labeled "high" 408, and a midpoint between the first and second endpoints 406, 408 labeled "medium" 410.

The account value axis 404 may include a first endpoint labeled "low" 412, a second endpoint labeled "high" 414, and a midpoint between the first and second endpoints 412, 414 labeled "medium" 416.

In FIG. 4, the x-axis 402 and the y-axis 404 of the supplier preferencing matrix 400 do not show numerical ranges because they are representative of a qualitative scale rather than a quantitative scale. However, the first assignment of numerical weights of the expert system 104 also assigns a numerical weight along a linear scale to each of these qualitative axis delimiters, namely the "low," "medium," and "high" delimiters on the x-axis 402 and the "low," "medium," and "high" delimiters on the y-axis 404.

In one embodiment, the first assignment of numerical weights by the expert system 104 assigns to the delimiters of the x-axis 402 and y-axis 404 the same linear numeral range that is assigned to the first set of predefined answers.

As an example, with the first set of predefined answers being "Low" with an assigned numerical weight of one (1), "Medium" with an assigned numeral weight of two (2), and "High" with an assigned numeral weight of three (3), the x-axis 402 delimiters are "low" with an assigned a numerical weight of one (1), "medium" with an assigned weight of two (2), and "high" with an assigned weight of three (3).

Similarly, the y-axis 404 delimiters are "low" with an assigned weight of one (1), "medium" with an assigned weight of two (2), and "high" with an assigned weight of three (3).

The supplier preferencing matrix 400 includes four quadrants centered around the intersection of the midpoints 410, 416, the first quadrant labeled "exploitable" 418, the second quadrant labeled "core" 420, the third quadrant labeled "nuisance" 422, and the fourth quadrant labeled "development" 424.

To determine the quadrant of an individual supplier within the supplier preferencing matrix 400, the supplier preferencing matrix engine 116 first determines a value for the account attractiveness axis 402. This x-axis value is determined using the specific predefined answer selected by the purchaser in response to the account attractiveness questions 216.

In one exemplary embodiment, the supplier preferencing matrix engine 116 presents the account attractiveness questions 216 to the purchaser and records the specific answers selected by the purchaser from the first set of predefined answers to each of these presented questions.

Once the specific answers have been recorded, the supplier preferencing matrix engine 116 calculates a value for the account attractiveness axis 402 as the weighted average of the weight of the presented account attractiveness questions 216 and the weight of the specific answers selected by the purchaser from the first set of predefined answers for each of the presented questions.

Next, the supplier preferencing matrix engine 116 calculates a value for the account value axis 404 as the weighted average of the weight of each of the presented account value questions 218 and the weight of the specific answers selected by the purchaser from the first set of predefined answers to each of these presented questions.

Once values for both the account attractiveness axis 402 and the account value axis 404 have been calculated, the supplier preferencing matrix engine 116 determines the individual supplier's corresponding quadrant within the supplier preferencing matrix 400.

If values for both the account attractiveness axis 402 and the account value axis 404 are less than or equal to the midpoints of the respective x-axis 402 and y-axis 404, then the quadrant within the supplier preferencing matrix 400 is determined to be the "nuisance" quadrant 422.

Alternatively, if the value for the account attractiveness axis 402 is less than or equal to the midpoint of the x-axis 402 and the value for the account value axis 404 is greater than the midpoint of the y-axis 404, then the quadrant within the supplier preferencing matrix 400 is determined to be the "exploitable" quadrant 418.

Alternatively, if the value for the account attractiveness axis 402 is greater than the midpoint of the x-axis 402 and the value for the account value axis 404 is less than or equal to the midpoint of the y-axis 404, then the quadrant within the supplier preferencing matrix 400 is determined to be the "development" quadrant 424.

Lastly, if the values for both the account attractiveness axis 402 and the account value axis 404 are both greater than the midpoints of the respective x-axis 402 and y-axis 404, then the quadrant within the supplier preferencing matrix 400 is determined to be the "core" quadrant 420.

The supplier preferencing matrix engine 116 may also determine a quadrant within the supplier preferencing matrix 400 that is representative of a selected group of suppliers within a procurement category.

In one exemplary embodiment, the supplier preferencing matrix engine 116 calculates a value for the account attractiveness axis 402 for the selected group as the weighted average of the values for the account attractiveness axis 402 for each individual supplier within the selected group and the total individual supplier spend within the procurement category.

Next, the supplier preferencing matrix engine 116 calculates a value for the account value axis 404 for the selected group as the weighted average of the values for the account value axis 404 for each individual supplier within the selected group and the total individual supplier spend within the procurement category.

The supplier preferencing matrix engine 116 may derive the total individual supplier spend within a procurement category from the purchaser's spend transactions stored on the client spend database 108.

Once the values for both the account attractiveness axis 402 and the account value axis 404 for the selected group of suppliers in the procurement category have been calculated, the supplier preferencing matrix engine 116 determines the quadrant corresponding to the selected groups within the supplier preferencing matrix 400.

If the values for both the account attractiveness axis 402 and the account value axis 404 for the selected group are less than or equal to the midpoints of the respective x-axis 402 and y-axis 404, then the quadrant within the supplier preferencing matrix 400 is determined to be the "nuisance" quadrant 422.

Alternatively, if the value for the account attractiveness axis 402 for the selected group is less than or equal to the midpoint of the x-axis 402 and the value for account value axis 404 for the selected group is greater than the midpoint of the y-axis 404, then the corresponding quadrant within the supplier preferencing matrix 400 is determined to be the "exploitable" quadrant 418.

Alternatively, if the value for the account attractiveness axis 402 for the selected group is greater than the midpoint of the x-axis 402 and the value for the account value axis 404 for the selected group is less than or equal to the midpoint of the y-axis 404, then the quadrant within the supplier preferencing matrix 400 is determined to be the "development" quadrant 424.

Lastly, if the values for both account attractiveness axis 402 and the account value axis 404 for the selected group are greater than the midpoints of the respective x-axis 402 and y-axis 404, then the quadrant within the supplier preferencing matrix 400 is determined to be the "core" quadrant 420.

Returning to FIG. 1, the procurement category situation engine 118 identifies one of the procurement category situations 204 stored in the knowledge database 110 that reflects a purchaser's situation within a procurement category. The identification is based on the combination of the quadrant of the purchaser within the Kraljic matrix 300 and the quadrant of the selected group of suppliers in the procurement category within the supplier preferencing matrix 400.

In one exemplary embodiment, there is a total of sixteen (16) procurement category situations 204, one for each of the possible combinations resulting from the four quadrants defined within the Kraljic matrix 300 and the four quadrants defined within the supplier preferencing matrix 400.

The recommended strategic levers engine 120 identifies specific strategic levers from the plurality of strategic levers 206 stored in the knowledge database 110. Each of the plurality of strategic levers representative of an individual action to be taken within a procurement category. A listing of specific levers selected from the plurality of strategic levers 206 based on the combination of the quadrant of the purchaser within the Kraljic matrix 300 and the quadrant of the selected group of suppliers within the supplier preferencing matrix 400. The listing of the specific strategic levers may be sorted according to the benefit points assigned to each of the specific strategic levers.

The strategic objective engine 122 identifies a listing of specific strategic objectives selected from the plurality of strategic objectives 208. Each of the plurality of strategic objectives is representative of an individual goal within a procurement category. A listing of specific strategic objectives is selected from the plurality of strategic objectives 208 stored in the knowledge database 110 based on the specific strategic levers selected for the purchaser within a procurement category.

The expert system 104 includes a first mapping between the plurality of strategic levers 206 and the plurality of strategic objectives 208. The first mapping enables the translation from the more detailed strategic levers to the more general strategic objectives. The first mapping is representative of the applicability of each of the plurality of strategic levers to each of the plurality of strategic objectives. Each strategic lever can be mapped to none or one or more related strategic objectives. Each strategic objective can be related to none or one or more strategic levers. Strategic levers represent actions whose execution leads towards achieving a goal represented by the strategic objective.

Specifically, each of the strategic objectives 208 is mapped to none or one or more of the strategic levers 206 based on the first mapping. Similarly, each of the strategic levers 206 is mapped to none or one or more of the strategic objectives 208 based on the first mapping.

Based on this first mapping between the strategic levers 206 and the strategic objectives 208, the strategic objective engine 122 identifies those strategic objectives 208 that are applicable to a purchaser using the listing of strategic levers 206 previously identified for the purchaser.

Once the strategic objectives 208 have been identified, the strategic objective engine 122 calculates the sum of the benefit points assigned to all the strategic levers 206 mapped to each of the identified strategic objectives 208.

Lastly, the strategic objective engine 122 presents an ordered listing of the selected strategic objectives 208 ordered according to the summed benefit points for each of the strategic objectives 208.

The strategy revision engine 124 modifies which specific strategic objectives from the plurality of strategic objectives 208 that are recommended to a purchaser. This modification is based on the specific answers selected by the purchaser from the second set of predefined answers in response to the strategy revision questions 226.

The expert system may also include a second assignment of weights that assigns a numerical weight along a linear scale to each of the specific answers comprising the second set of predefined answers. The second assignment of numerical weights is representative of the change in business benefit of applying a certain strategic lever, taking the corresponding answer into account. A specific answer to the question may trigger the benefit points change in one or more strategic levers as a response to the new insight gained from the answer. The new insight may trigger an increase in benefit points (business benefit of applying that strategic lever has increased due to the new insight) or a decrease in benefit points (business benefit of applying that strategic lever has decreased due to the new insight). The greater the influence of the insight on the business benefit of a strategic lever, the bigger the benefit points modification. Every answer is mapped only to strategic levers it directly influences.

The expert system 104 also includes a second mapping between each of the second set of predefined answers and the plurality of strategic levers 206. The second mapping enables a linking between specific answers from the second set of predefined answers and each of the plurality of strategic levers 206 which are influenced by the specific answers. The second mapping is representative of applicability of a specific answer from the second set of predefined answers to each of the plurality of strategic levers 206.

Every specific answer is linked only to each of the plurality of strategic levers 206 which are influenced by the specific answers. Each specific answer has an assigned weight which represents how big of an influence a specific answer has on one or more strategic levers within the plurality of strategic levers 206.

The weights assigned to the specific answers selected by the purchaser are used to modify the benefit points of the plurality of strategic levers based on the second mapping. The strategy revision engine 124 identifies which specific strategic objectives from the plurality of strategic objectives 208 are recommended to the purchaser based on the updated benefit points of the specific strategic levers and the first mapping.

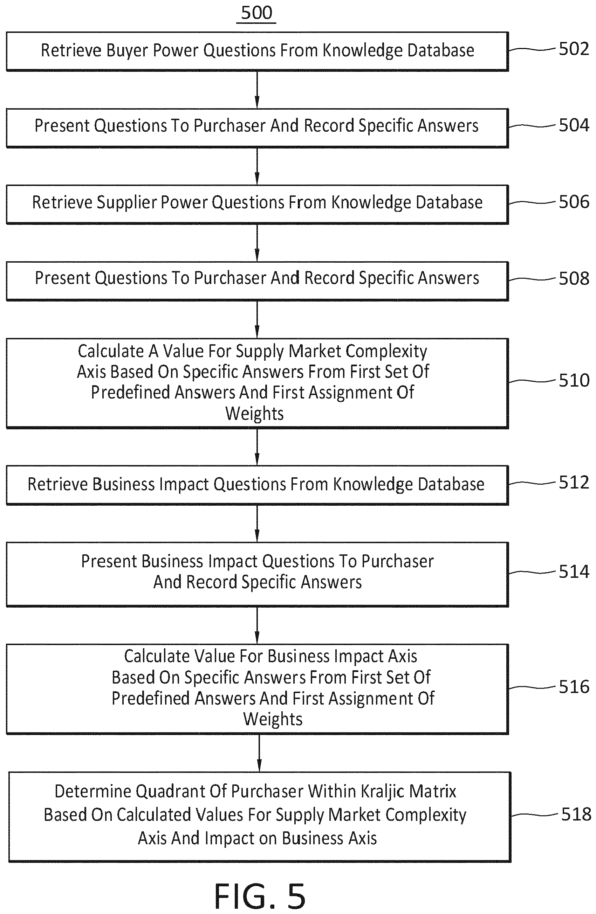

FIG. 5 is a flow chart of a method 500 implemented by the Kraljic matrix engine 114 according to the embodiments disclosed herein. The method 500 begins in step 502 with the Kraljic matrix engine 114 retrieving the buyer power questions 210 from the knowledge database 110.

Once the buyer power questions 210 have been retrieved, in step 504, the Kraljic matrix engine 114 presents the questions to the purchaser and records the specific answers selected by the purchaser from the first set of predefined answers to the questions.

Next, in step 506, the Kraljic matrix engine 114 retrieves the supplier power questions 212 from the knowledge database 110.

Once the supplier power questions 212 have been retrieved, in step 508, the Kraljic matrix engine 114 presents these questions to the purchaser and records the specific answers selected by the purchaser from the first set of predefined answers to the questions.

Next, in step 510, the Kraljic matrix engine 114 calculates a value for the supply market complexity axis 302 based on the specific answers selected by the purchaser from the first set of predefined answers and the first assignment of weights to the buyer power and supplier power questions 210, 212 and the first set of predefined answers.

Once the value for the supply market complexity axis 302 has been calculated, in step 512, the Kraljic matrix engine 114 retrieves the business impact questions 214 from the knowledge database 110.

Once the business impact questions 214 have been retrieved, in step 514, the Kraljic matrix engine 114 presents these questions to the purchaser and records the specific answers selected by the purchaser from the first set of predefined answers to the questions.

Next, in step 516, the Kraljic matrix engine 114 calculates a value for the impact on business success axis 304 based on the specific answers selected by the purchaser from the first set of predefined answers and the first assignment of weights to the business impact questions 214 and the first set of predefined answers.

Lastly, in step 518, the Kraljic matrix engine 114 determines the quadrant for the purchaser within a Kraljic matrix 300 based on the calculated values of the supply market complexity axis 302 and the impact on business success axis 304.

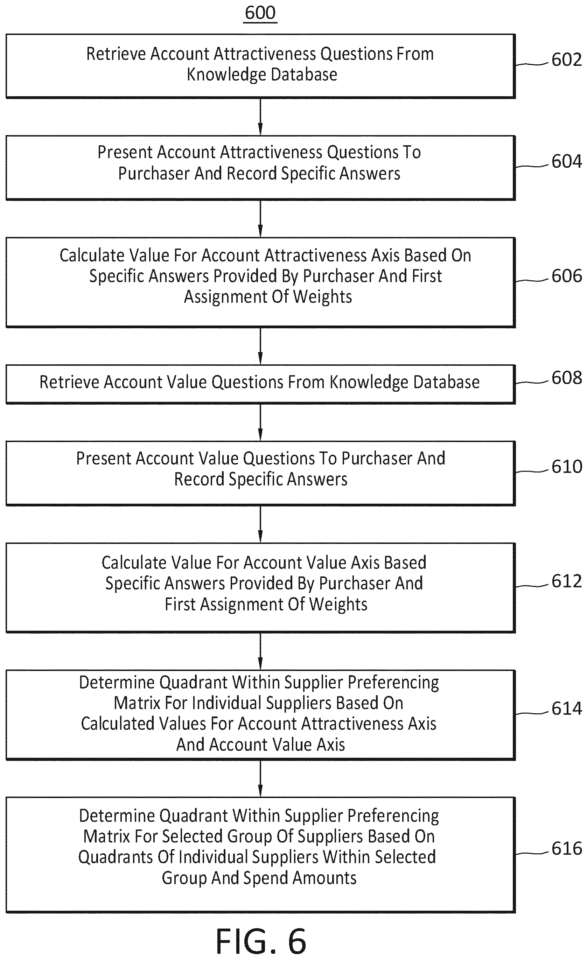

FIG. 6 is a flow chart of a method 600 implemented by the supplier preferencing matrix engine 116 according to the embodiments disclosed herein.

The method begins in step 602 with the supplier preferencing matrix engine 116 retrieving the account attractiveness questions 216 from the knowledge database 110.

Once the account attractiveness questions 216 have been retrieved, in step 604, the supplier preferencing matrix engine 116 presents the questions to the purchaser and records the specific answers selected by the purchaser from the first set of predefined answers to the questions.

Once the specific answers have been recorded, in step 606, the supplier preferencing matrix engine 116 calculates a value for the account attractiveness axis 402 based on the specific answers selected by the purchasers from the first set of predefined answers and the first assignment of weights to the account attractiveness questions 216 and the first set of predefined answers.

Next, in step 608, the supplier preferencing matrix engine 116 retrieves the account value questions 218 from the knowledge database 110.

Once the account value questions 218 have been retrieved, in step 610, the supplier preferencing matrix engine 116 presents the questions to the purchaser and records the specific predefined answer selected by the purchaser to these presented questions.

Once the specific answers selected by the purchaser have been recorded, in step 612, the supplier preferencing matrix engine 116 calculates a value for the account value axis 404 based on the specific answers selected by the purchasers from the first set of predefined answers and the first assignment of weights to the account value questions 218 and the first set of predefined answers.

Next, in step 614, the supplier preferencing matrix engine 116 determines the quadrant for individual suppliers within the supplier preferencing matrix 400 based on the calculated values for the account attractiveness axis 402 and the account value axis 404.

Lastly, in step 616, the supplier preferencing matrix engine 116 determines the quadrant within the supplier preferencing matrix 400 for a selected group of suppliers within a procurement category based on the quadrants corresponding to the individual supplier within the selected group and the spend amounts for each of those individual suppliers with procurement category.

The steps of presenting the questions to the purchaser and recording the specific answers selected by the purchaser may done from a client device in communication with the expert system 104 via the network 106. The client device may be a processor based general-purpose computer with a display and a network interface. The client device may receive the presented questions from the expert system 104, display the received presented questions, allow the purchaser to select specific answers, and transmits the specific answer to the expert system 104.

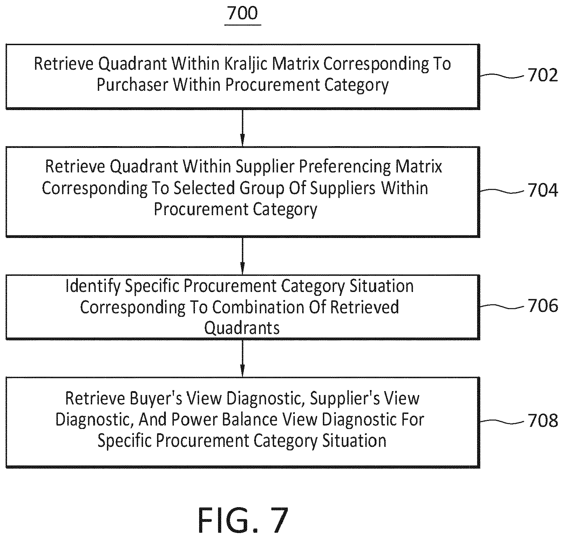

FIG. 7 is a flow chart of a method 700 implemented by the procurement category situation engine 118 according to the embodiments disclosed herein. The method 700 begins, in step 702, with the procurement category situation engine 118 retrieving a quadrant within the Kraljic matrix 300 corresponding to a purchaser within a procurement category.

Next, in step 704, the procurement category situation engine 118 retrieves the quadrant within the supplier preferencing matrix 400 that corresponds to a selected group of suppliers within the procurement category.

Once the quadrants have been retrieved, in step 706, the procurement category situation engine 118 identifies the specific procurement category situation corresponding to the combination of the retrieved quadrants.

Lastly, in step 708, the procurement category situation engine 118 retrieves a buyer's view diagnosis 220, a supplier's view diagnosis 222, and a power balance view diagnosis 224 for the specific procurement category situation.

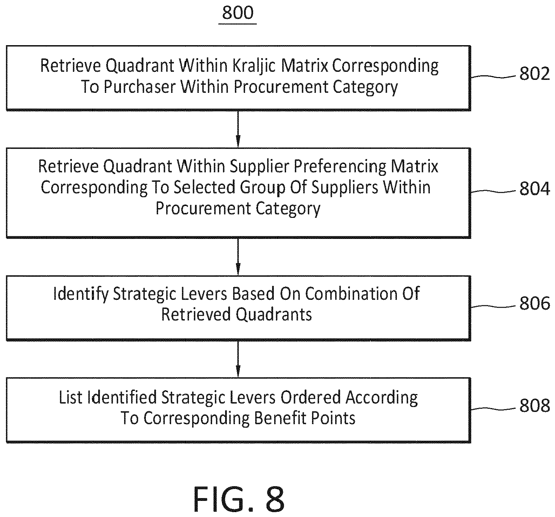

FIG. 8 is a flow chart of a method 800 implemented by the strategic levers engine 120 according to the embodiments disclosed herein. The method 800 begins, in step 802, with the strategic levers engine 120 retrieving a quadrant within the Kraljic matrix 300 corresponding to a purchaser within a procurement category.

Next, in step 804, the strategic levers engine 120 retrieves the quadrant within the supplier preferencing matrix 400 that corresponds to a selected group of suppliers within the procurement category.

Once the quadrants have been retrieved, in step 806, the strategic levers engine 120 identifies specific strategic levers from the plurality of strategic levers 206 from the knowledge database 110 based on the combination of the retrieved quadrants.

Lastly, in step 808, the strategic levers engine 120 lists the specific strategic levers ordered according to the benefit points assigned to each of the recommended strategic levers 206.

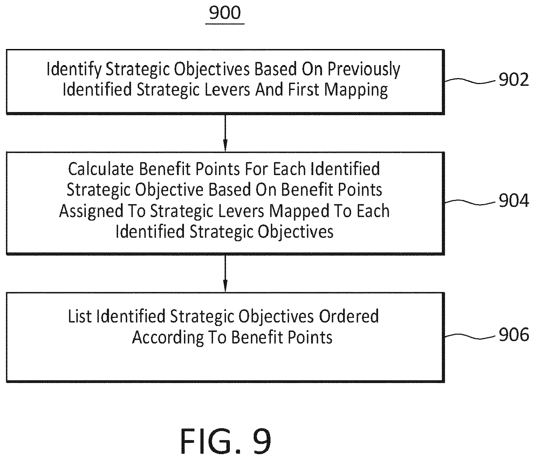

FIG. 9 is a flow chart of a method 900 implemented by the strategic objective engine 122 according to the embodiments disclosed herein. The method 900 begins, in step 902, with the strategic objective engine 122 identifying specific strategic objectives from the strategic objectives 208 based on previously identified specific strategic levers from the strategic levers 206 and the first mapping.

Next, in step 904, the strategic objective engine 122 calculates the benefit points for each of the identified specific strategic objectives based on the numerical benefit points assigned to the specific strategic levers mapped to each of the identified specific strategic objectives.

Lastly, in step 906, the strategic objective engine 122 lists the specific strategic objectives ordered according to the benefit points calculated for each of the identified specific strategic objectives.

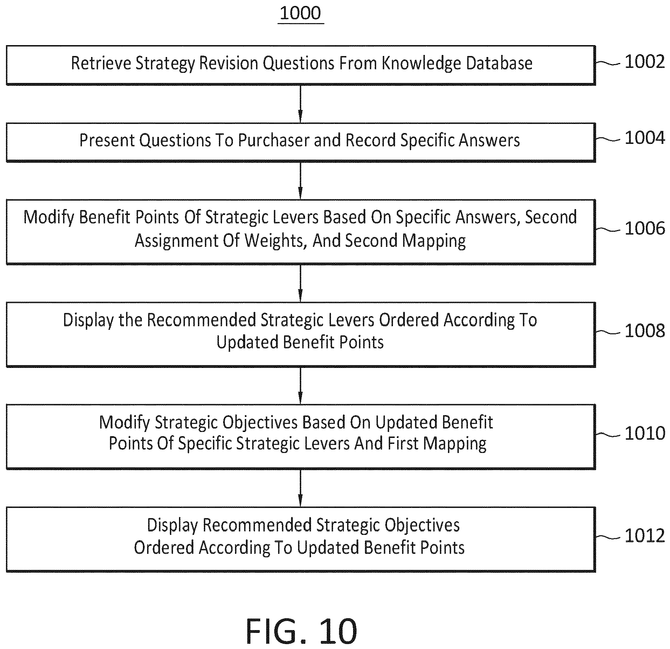

FIG. 10 is a flow chart of a method 1000 implemented by the strategy revision engine 124 according to the embodiments disclosed herein. The method 1000 begins, in step 1002, with the strategy revision engine 124 retrieving the strategy revision questions 226 from the knowledge database 110.

Once the plurality of strategy revision questions 226 has been retrieved, in step 1004, the strategy revision engine 124 presents the questions to the purchaser and records the specific answers selected by the purchaser from the second set of predefined answers to the questions.

Once the specific answers selected by the purchaser have been recorded, in step 1006, the strategy revision engine 124 modifies the benefit points assigned to the specific strategic levers previously identified by the strategic levers engine 120. The benefit points are modified using the second assignment of weights to each of the specific answers provided by the purchaser and the second mapping which identifies which strategic levers are to be modified.

Once the benefit points have been modified, in step 1008, the strategy revision engine 124 lists the specific strategic levers previously identified by the strategic levers engine 120 ordered according to their modified benefit points.

Next, in step 1010, the strategy revision engine 124 reevaluates which of the plurality of strategic objectives 208 are applicable based on the modified benefit points of the specific strategic levers and the first mapping.

Lastly, in step 1012, the strategy revision engine 124 lists the newly applicable strategic objectives ordered according to the updated benefit points.

The foregoing description discloses only example embodiments. Modifications of the above-disclosed assemblies and methods which fall within the scope of this disclosure will be readily apparent to those of ordinary skill in the art.

This disclosure is not intended to limit the invention to the particular assemblies and/or methods disclosed, but, to the contrary, the intention is to cover all modifications, equivalents, and alternatives falling within the scope of the claims.

## Claims

1. A system for generating strategies for procurement categories, comprising:
a client spend database including a plurality of spend transactions between a purchaser and a plurality of suppliers and within one or more procurement categories;
a knowledge database including a plurality of questions with a first set of predefined answers, a plurality of strategic levers, and a plurality of strategic objectives;
an expert system that is processor based and is communicatively coupled to the client spend database and the knowledge database;
the expert system implementing a Kraljic matrix engine and a supplier preferencing matrix engine;
the Kraljic matrix engine capable of determining a first quadrant within a Kraljic matrix defined by a supply market complexity axis and an impact on business success axis for the purchaser within a procurement category, the first quadrant within a Kraljic matrix being reflective of specific answers selected from the first set of predefined answers by the purchaser to the plurality of questions;
the supplier preferencing matrix engine capable of determining a second quadrant within a supplier preferencing matrix defined by an account attractiveness axis and an account value axis for a selected grouping of suppliers within the procurement category, the second quadrant within a supplier preferencing matrix being reflective of specific answers selected from the first set of predefined answers by the purchaser to the plurality of questions;
the expert system including a first assignment of numerical weights that assigns a numerical weight to each of the plurality of questions and each of the first set of predefined answers and a first mapping between the plurality of strategic levers and the plurality of strategic objectives;
the expert system further implementing a strategic levers engine capable of identifying specific strategic levers from the plurality of strategic levers based on a combination of the first quadrant and the second quadrant; and
the expert system further implementing a strategic objectives engine capable of identifying one or more specific strategic objectives from the plurality of strategic objectives based on the first mapping.

2. The system for generating strategies for procurement categories of claim 1, wherein the first assignment of numerical weights is representative of importance of each of the plurality of questions to determination of the first quadrant within a Kraljic matrix and the second quadrant within a supplier preferencing matrix.

3. The system for generating strategies for procurement categories of claim 2, wherein the first assignment of numerical weights assigns a numerical weight along a linear scale to each of the plurality of questions and a numerical weight along a linear scale to each of the first set of predefined answers.

4. The system for generating strategies for procurement categories of claim 1, wherein the first mapping is representative of applicability of each of the plurality of strategic levers to each of the plurality of strategic objectives.

5. The system for generating strategies for procurement categories of claim 1, wherein
the knowledge database further includes a plurality of procurement category situations; and
the expert system further implementing a procurement category situation engine capable of identifying a specific procurement category situation from the plurality of procurement category situations based on the combination of the first quadrant and the second quadrant.

6. The system for generating strategies for procurement categories of claim 5, wherein the specific procurement category situation includes a buyer's view, a supplier's view, and a power balance view.

7. The system for generating strategies for procurement categories of claim 1, wherein the strategic levers engine assigns benefit points to each of the plurality of strategic levers, the benefits points being numerical along a linear scale and representative of a degree of business benefit that each of the plurality of strategic levers may have on a procurement category.

8. The system for generating strategies for procurement categories of claim 7, wherein the strategic objectives engine provides a list of specific strategic objectives ordered according to a sum of the benefit points assigned to each of the one or more specific strategic levers mapped to the list of specific strategic objectives by the first mapping.

9. The system for generating strategies for procurement categories of claim 7, wherein the knowledge database further including strategy revision questions with a second set of predefined answers; the expert system further implementing a strategy revision engine; the expert system further including a second mapping between the second set of predefined answers and the plurality of strategic levers and a second assignment of weights that assign a numerical weight to each of the second set of predefined answers; the strategy revision engine capable of modifying the benefit points assigned to each of the plurality of strategic levers, the modification of the benefit points based on specific answers selected from the second set of predefined answers by the purchaser to the strategy revision questions and the second mapping.

10. The system for generating strategies for procurement categories of claim 9, wherein the second mapping is representative of applicability of a specific answer from the second set of predefined answers to each of the plurality of strategic levers.

11. The system for generating strategies for procurement categories of claim 9, wherein the second assignment of weights is representative of how each of the second set of predefined answers affects application of each of the plurality of strategic levers to a procurement category.

12. The system for generating strategies for procurement categories of claim 1, wherein the plurality of questions includes a set of buyer power questions designed to assess power of the purchaser in a procurement category.

13. The system for generating strategies for procurement categories of claim 1, wherein the plurality of questions includes a set of supplier power questions designed to assess power of each of the plurality of suppliers within a procurement category.

14. The system for generating strategies for procurement categories of claim 1, wherein the plurality of questions includes a set of business impact questions designed to assess importance of a procurement category to a purchaser.

15. The system for generating strategies for procurement categories of claim 1, wherein the plurality of questions includes a set of account attractiveness questions designed to assess attractiveness of a purchaser to each of a plurality of suppliers.

16. The system for generating strategies for procurement categories of claim 1, wherein the plurality of questions includes a set of account value questions designed to assess a relative value of the purchaser to each of a plurality of suppliers.

17. The system for generating strategies for procurement categories of claim 1, wherein each of the plurality of strategic levers is representative of an individual action to be taken within a procurement category.

18. The system for generating strategies for procurement categories of claim 1, wherein each of the plurality of strategic objectives is representative of an individual goal within a procurement category.

19. A method for generating strategies for procurement categories, the method comprising:
providing a client spend database including a plurality of spend transactions between a purchaser and a plurality of suppliers and within one or more procurement categories;
providing a knowledge database including a plurality of questions with a first set of predefined answers, a plurality of strategic levers, and a plurality of strategic objectives;
providing an expert system that is processor based and is communicatively coupled to the client spend database and the knowledge database, the expert system including a first assignment of numerical weights that assigns a numerical weight to each of the plurality of questions and each of the first set of predefined answers and a first mapping between the plurality of strategic levers and the plurality of strategic objectives;
determining a first quadrant within a Kraljic matrix defined by a supply market complexity axis and an impact on business axis for the purchaser within a procurement category, the first quadrant being reflective of specific answers selected from the first set of predefined answers by the purchaser to the plurality of questions;
determining a second quadrant within a supplier preferencing matrix defined by an account attractiveness axis and an account value axis for a selected grouping of suppliers within the procurement category, the second quadrant being reflective of specific answers selected from the first set of predefined answers by the purchaser to the plurality of questions;
identifying specific strategic levers from the plurality of strategic levers based on a combination of the first quadrant and the second quadrant; and
identifying specific strategic objectives from the plurality of strategic objectives based on the first mapping.

20. The method for generating strategies for procurement categories of claim 19, the method further comprising:
providing strategy revision questions with a second set of predefined answers in the knowledge database;
providing in the expert system a second mapping between the second set of predefined answers and the plurality of strategic levers and a second assignment of weights that assign a numerical weight to each of the second set of predefined answers;
assigning numerical benefit points along a linear scale to each of the plurality of strategic levers; and
modifying the numerical benefit points assigned to each of the plurality of strategic levers, the modification of the numerical benefit points based on specific answers selected from the second set of predefined answers by the purchaser to the strategy revision questions and the second mapping.
